# EUROPEAN PATENT APPLICATION

(11) **EP 4 459 814 A1**
(43) Date of publication of application: **06.11.2024**
(21) Application number: 22914750.9
(22) Date of filing: 27.12.2022
(51) Int. Cl.: H01R 24/00, H01R 13/02, H01R 13/03, H01R 4/30, B60L 53/16

(54) **CONVENIENTLY REPLACEABLE CHARGING SOCKET AND VEHICLE**

(30) Priority: 30.12.2021 CN 202123414838 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Elkington and Fife LLP
(86) International application number: PCT/CN2022/142218
(87) International publication number: WO 2023/125496

(57) **Abstract**

The present disclosure discloses a conveniently replaceable charging socket and a vehicle, which relates to the technical field of new energy vehicle manufacturing and includes a charging socket body (1), a transition flat cable (2) and a conductive cable (3). The charging socket body (1) is provided therein with a charging terminal (11). The transition flat cable (2) has one end connected to the charging terminal (11), and the other end detachably connected to the conductive cable (3). The present disclosure has the advantageous effects that when the charging socket is to be replaced, the charging socket body can be detached from the vehicle body just by separating the transition flat cable from the conductive cable, and the conductive cable that has been fixed in the vehicle body is not required to be detached. In addition, the present disclosure can disconnect an electrified system during maintenance of the charging socket or before charging, thereby eliminating the risk of electric shock to maintenance personnel.

## Description

The present disclosure claims priority to Chinese Patent Application No. 202123414838.X, entitled "conveniently replaceable charging socket and vehicle", and filed on December 30, 2021, which is hereby incorporated by reference in its entirety.

### TECHNICAL FIELD

The present disclosure relates to the technical field of the manufacturing of new energy vehicles, and particularly to a replaceable charging socket and a vehicle.

### BACKGROUND

With the development of society and the improvement of economic level, people's awareness of environmental protection has gradually increased, and the demand for low-carbon life and low-carbon economy has become increasingly stronger. The use of electric vehicles is increasing. The electric vehicle is charged by matching a charging socket with a charging gun. The charging socket in a charging system includes a device fixed to a vehicle body, a cable and a terminal, the charging socket is fixedly mounted on the vehicle, and the charging terminal is connected to the cable. In the traditional design process of the charging socket, the terminal and the charging cable are usually connected to each other by crimping or welding, and then integrally assembled on a main shell of the charging socket, thus the assembly is difficult, the heat dissipation performance is poor, which affect the safety of high-voltage charging. More importantly, when the charging socket needs to be replaced, it is necessary to detach the cable firstly, and then detach the charging socket from the vehicle body, which is time-consuming and labor-intensive. Meanwhile, the traditional charging socket is likely to cause harm to the operation and maintenance personnel during the charging or maintenance process if a short circuit occurs or a short-circuit or communication is caused for other reasons. Thus, there is an urgent need for a new solution to solve the above problems in the prior art.

### SUMMARY

The present disclosure aims to provide a new technical solution that facilitates the replacement or maintenance of a charging socket of an electric vehicle.

A conveniently replaceable charging socket, including a charging socket body, a transition flat cable and a conductive cable. The charging socket body is provided therein with a charging terminal. The transition flat cable has one end connected to the charging terminal, and the other end detachably connected to the conductive cable.

A vehicle, including the conveniently replaceable charging socket described above. The charging socket body is detachably connected to a vehicle body of the vehicle, and the conductive cable is provided on the vehicle body.

The present disclosure has the advantageous effects that when the charging socket is to be replaced, the charging socket body can be detached from the vehicle body just by separating the transition flat cable from the conductive cable, without the need to detach the conductive cable that has been fixed inside the vehicle body. In addition, the present disclosure can disconnect an electrified system during maintenance of the charging socket or before charging, thereby eliminating the risk of electric shock to maintenance personnel.

Other features and advantages of the present disclosure will become clear from the following detailed description of the exemplary embodiments of the present disclosure with reference to the drawings.

### BRIEF DESCRIPTION OF DRAWINGS

The drawings, which are incorporated in and constitute a part of the specification, illustrate embodiments of the present disclosure and together with the description, explain the principles of the present disclosure.
FIG. 1 illustrates a front view of a conveniently replaceable charging socket according to the present disclosure.
FIG. 2 illustrates a schematic diagram of a connection relationship of a transition flat cable of a conveniently replaceable charging socket according to the present disclosure.
FIG. 3 illustrates a schematic diagram of another connection relationship of a transition flat cable of a conveniently replaceable charging socket according to the present disclosure.
FIG. 4 illustrates a right view of a conveniently replaceable charging socket according to the present disclosure.
FIG. 5 illustrates a schematic diagram of a bent portion of a conveniently replaceable charging socket according to the present disclosure.
FIG. 6 illustrates a schematic diagram of a twisted portion of a conveniently replaceable charging socket according to the present disclosure.

### DETAILED DESCRIPTION OF EMBODIMENTS

Various exemplary embodiments of the present disclosure will now be described in detail with reference to the drawings. It should be noted that the relative arrangements, numerical expressions and numerical values of components and steps set forth in these embodiments do not limit the scope of the present disclosure unless otherwise specified.

The following description of at least one exemplary embodiment is merely illustrative in nature and is in no way intended to limit the present disclosure and the application or use thereof.

Techniques, methods and devices known to those skilled in the art may not be discussed in detail, but they should be regarded as parts of the specification under appropriate circumstances.

In all examples illustrated and discussed herein, any specific value should be interpreted as illustrative only rather than a limitation. Therefore, other examples of the exemplary embodiments may have different values.

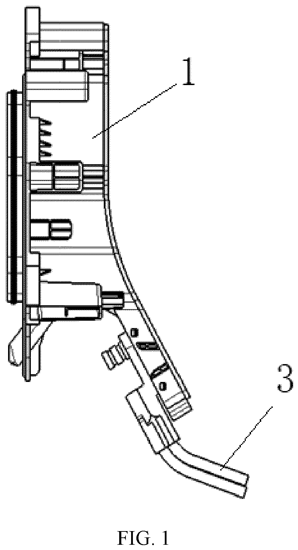

The present disclosure discloses a conveniently replaceable charging socket, as illustrated in FIGS. 1 to 4, including a charging socket body 1, a transition flat cable 2 and a conductive cable 3. The charging socket body 1 is provided therein with a charging terminal 11. The transition flat cable 2 has one end connected to the charging terminal 11, and the other end detachably connected to the conductive cable 3. In the existing charging socket structure, the conductive cable 3 is directly connected to the charging terminal 11 in the charging socket body 1, while the conductive cable 3 is firmly fixed in the vehicle body. In order to make the overall layout of the vehicle body more reasonable, to enable the conductive cable 3 to avoid other accessories in the vehicle, and to prevent the loosening of the conductive cable 3 caused by the long-term shaking of the vehicle, it usually requires a meticulous design of a route of the conductive cable 3 from the charging socket to a battery of the vehicle and a secure fixing method of the conductive cable 3. When the charging socket is to be detached, the conductive cable 3 needs to be detached from the charging socket body 1 firstly and then the conductive cable 3 is able to be removed. However, the movement of the conductive cable 3 is not a simply separation from the charging socket, but also requires dismantlement of a plurality of nodes, thus making the replacement of the charging socket a very cumbersome task, and excessive dismantling is also prone to causing a circuit damage. When the charging socket is to be maintained, the traditional charging socket is likely to cause harm to the operation and maintenance personnel during the charging or maintenance process if a short circuit occurs or a short-circuit or a short-circuit or communication is caused for other reasons. According to the present disclosure, the maintenance can be carried out after the transition flat cable 2 and the conductive cable 3 are conveniently disconnected from each other. Meanwhile, the conveniently replaceable charging socket according to the present disclosure can be replaced independently without the need to move the conductive cable 3. During the replacement of the charging socket, the charging socket body 1 can be detached from the vehicle body just by separating the transition flat cable 2 from the conductive cable 3, and after putting the new charging socket body 1, the transition flat cable 2 is connected to the charging terminal 11 and the conductive cable 3, respectively, to complete the mounting. In some embodiments, the transition flat cable 2 and the charging terminal 11 are integrally formed to serve as a part of the charging socket body 1, thereby facilitating quick replacement and reducing connection points to reduce the resistance.

In some embodiments, the charging terminal 11 and the transition flat cable 2 are connected by means of crimping, welding, screwing or riveting.

When a connecting end of the charging terminal 11 to be connected with the transition flat cable 2 is of flat shape, a crimping method is adopted. The crimping is a production process in which the connecting end and the transition flat cable 2 are assembled and then stamped into a whole by using a crimping machine.

When the charging terminal 11 is welded with the transition flat cable 2, resistance welding, friction welding, ultrasonic welding, arc welding, laser welding, electron beam welding, diffusion welding or magnetic induction welding may be adopted.

The resistance welding refers to a method of welding by passing strong current through a contact point between an electrode and a workpiece to generate heat by a contact resistance.

The friction welding refers to a method of welding by using the heat generated by the friction between the contact surfaces of the workpieces as a heat source, to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method that uses a laser beam with high energy density as a heat source.

The electron beam welding method refers to a method of using accelerated and focused electron beam to bombard the welding surface that is placed in vacuum or non-vacuum, to melt the welded workpiece to achieve welding.

The diffusion welding refers to a solid-state welding method that pressurizes the workpiece at high temperature without producing visible deformation and relative movement.

The magnetic induction welding refers to that that two to-be-welded workpieces are instantaneously collided with each other at high speed under the action of a strong pulsed magnetic field, so that under the action of high pressure waves, the atoms of the two materials on the material surfaces of the two workpieces can meet within interatomic distance, thus forming a stable metallurgical bond at the interface. The magnetic induction welding is a type of solid-state cold welding that can weld conductive metals with similar or dissimilar properties.

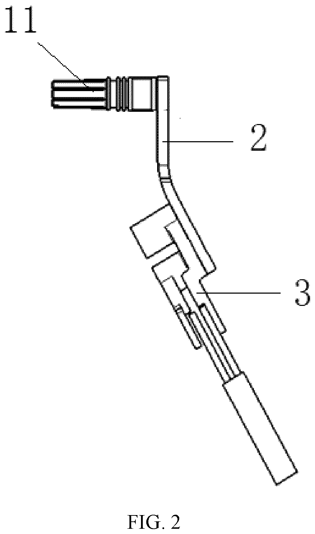

There are two ways for screwing. The one is that the connection end of the charging terminal 11 is of flat shape, both the connection end and the transition flat cable 2 are provided with screw holes so as to be connected by a screw and a nut. The other is that the connection end of the charging terminal 11 is cylindrical and has external threads as illustrated in FIG. 2, the transition flat cable 2 has a hole and is sleeved at the connection end, and then they are tightened using a nut to complete the screwing.

When the riveting is adopted, a rivet is allowed to penetrate fixing holes, which are provided at overlapping positions of the connecting end of the charging terminal 11 and the transition flat cable 2, and a penetrating end of the rivet is deformed to tighten the fixing holes, so that the connecting end is fixedly connected to the transition flat cable 2.

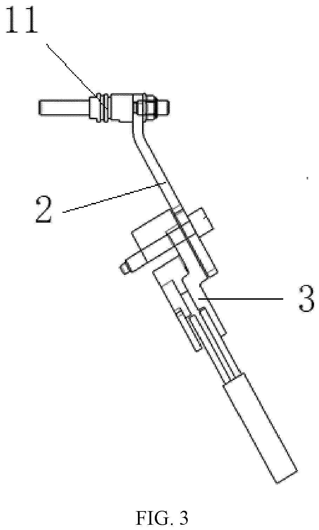

In some embodiments, the conductive cable 3 is a flat cable and connected to the transition flat cable 2 by a bolt, as illustrated in FIG. 3. When the conductive cable 3 is a flat cable, the conductive cable 3 and the transition flat cable 2 may be provided with screw holes and then connected by a bolt, which is more convenient for mounting or separation.

In some embodiments, the conductive cable 3 is a copper busbar or an aluminum busbar. In the field of electrical connections, the copper conductor is usually used for current conduction since copper has high electrical conductivity and good ductility. However, due to the increasing price of copper, the material cost of using copper as a wire is higher and higher. To this end, people begin to use aluminum with a lower price. In addition, compared with copper, aluminum is lighter, and its electrical conductivity is second only to copper, so that aluminum can partially replace copper in the field of electrical connections. Therefore, the copper busbar and the aluminum busbar can be selected as needed.

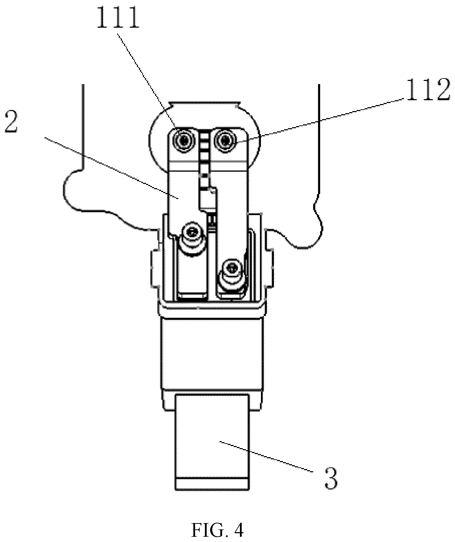

In some embodiments, the charging socket body 1 is a DC (Direct Current) charging socket body, and as illustrated in FIG. 4, there are two charging terminals 11, i.e., a positive terminal 111 and a negative terminal 112, each of which is connected to one transition flat cable 2, and each of the transition flat cables 2 is detachably connected to one conductive cable 3 to form a complete DC charging socket.

In some embodiments, the charging terminal 11 has a plating layer. The charging terminal 11 is a copper terminal or an aluminum terminal. Copper or aluminum, as an active metal, will undergo an oxidation reaction with oxygen and water during use, so one or more inactive metals are needed as a plating layer to prolong the service life of the terminal with a memory function. The plating layer may be provided on the charging terminal 11 by means of electroplating, electroless plating, magnetron sputtering or vacuum plating.

The electroplating is a process of plating, on a surface of some metal, a thin layer of other metal or alloy using electrolysis principle.

The chemical plating is a deposition process that produces a metal through a controllable oxidation-reduction reaction under a metal catalytic action.

The magnetron sputtering is to use an interaction of a magnetic field and an electric field to make electrons move spirally near a target surface, thereby increasing the probability that electrons bombard argon to generate ions. The generated ions bombard the target surface under the action of the electric field so as to sputter a target material.

The vacuum plating is to deposit various metal and non-metal films on the surface of a part by means of distillation or sputtering under a vacuum condition.

In some embodiments, a contact resistance between the transition flat cable 2 and the conductive cable 3 is less than 9 mS2.

Further, the contact resistance between the transition flat cable 2 and the conductive cable 3 is less than 1 mS2.

Generally, the transition flat cable 2 and the conductive cable 3 need to conduct a large current. If the contact resistance between the transition flat cable 2 and the conductive cable 3 is greater than 9 mQ, a large temperature rise will occur at the contact position between the transition flat cable 2 and the conductive cable 3, and the temperature will be increasingly higher with the elapse of time. The excessive temperature might be transferred to the insulating layers of the transition flat cable 2 and the conductive cable 3, resulting in melting of the corresponding insulating layers. In severe cases, short circuit of the lines may be caused, resulting in damage to the connection structure, and even safety accidents such as burning. Meanwhile, when the contact resistance is too high, the electrical conductivity will also be affected. Therefore, the inventor sets the contact resistance between the transition flat cable 2 and the conductive cable 3 to be less than 9 mS2.

In order to verify the influence of the contact resistance between the transition flat cable 2 and the conductive cable 3 on the temperature rise and the electrical conductivity at the connecting position, the inventor selects the same conductive cables 3 and the same transition flat cables 2 with different contact resistances, to test the electrical conductivity and the temperature rise of the transition flat cables 2.

The test on the electrical conductivity is to detect, after connecting and electrifying the transition flat cable 2 and the conductive cable 3, the electrical conductivity at the connection position of them. In this embodiment, the electrical conductivity greater than 99% is an ideal value.

The test on the temperature rise is to supply the same current, detect the temperatures of the transition flat cable 2 and the conductive cable 3 at the same position before the current supply and after the temperature is stable in a closed environment, and take a difference therebetween to obtain an absolute value. In this embodiment, the temperature rise greater than 50 K is unqualified. The results are shown in Table 1.

**Table 1: Influence of different contact resistances between the transition flat cable 2 and the conductive cable 3 on the electrical conductivity and the temperature rise**

| Different contact resistances between the transition flat cable 2 and the conductive cable 3 (mΩ) | | | | | | | | |
|---|---|---|---|---|---|---|---|---|
| 10 | 9 | 8 | 6 | 4 | 3 | 2 | 1 | 0.5 |

| Temperature rise of at the connecting position of the transition flat cable 2 and the conductive cable 3 (k) | | | | | | | | |
|---|---|---|---|---|---|---|---|---|
| 56 | 48 | 42 | 35 | 28 | 24 | 20 | 14 | 7 |

| Electrical conductivity at the connecting position (%) | | | | | | | | |
|---|---|---|---|---|---|---|---|---|
| 98.8 | 99.4 | 99.6 | 99.6 | 99.7 | 99.8 | 99.8 | 99.9 | 999 |

As can be seen from Table 1, when the contact resistance between the transition flat cable 2 and the conductive cable 3 is greater than 9 mQ, the temperature rise exceeds 50 K, and the electrical conductivity is less than 99%, which does not meet the standard requirement. Therefore, the inventor sets the contact resistance between the transition flat cable 2 and the conductive cable 3 to be less than 9 mS2.

Exemplarily, when the contact resistance between the transition flat cable 2 and the conductive cable 3 is less than 1 mQ, the temperature rise at the connecting position of the transition flat cable 2 and the conductive cable 3 is small and does not exceed 20K, and the electrical conductivity reaches 99.9%, i.e., the electrical conduction effect is good. Therefore, the inventor prefers that the contact resistance between the transition flat cable 2 and the conductive cable 3 is less than 1 mS2.

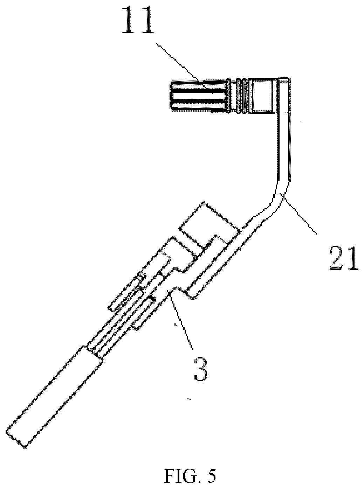

In some embodiments, the transition flat cable 2 has at least one bent portion 21, as illustrated in FIG. 5, and an included angle between two adjacent flat surfaces connected by the bent portion 21 is 45° to 180°. The bent portion 21 enables the transition flat cable to have different outlet directions. However, if the included angle is not suitable, the conductive cable 3 cannot be mounted. In order to find a suitable included angle, the inventor carries out relevant tests, and selects the same charging socket bodies 1, the same conductive cables 3, and different transition flat cables 2 having bent portions 21 with different angles. Firstly, the transition flat cable 2 is connected to the charging socket body 1; and it is considered to be qualified if the conductive cable 3 is connected normally, otherwise it is considered to be unqualified. The results are shown in Table 2.

**Table 2: Influence of the bent portions with different included angles on whether the conductive cable can be mounted**

| Included angle between two adjacent flat surfaces connected by the bent portion (°) | | | | | | | | | |
|---|---|---|---|---|---|---|---|---|---|
| 43 | 45 | 50 | 65 | 80 | 100 | 120 | 140 | 160 | 180 |

| Whether the conductive cable can be mounted | | | | | | | | | |
|---|---|---|---|---|---|---|---|---|---|
| No | Yes | Yes | Yes | Yes | Yes | Yes | Yes | Yes | Yes |

As shown in Table 2, when the included angle between two adjacent flat surfaces connected by the bent portion 21 is less than 45°, the conductive cable 3 cannot be mounted, which is unqualified. When the included angle is greater than or equal to 45°, the conductive cable 3 can be mounted. Therefore, the inventor prefers that the included angle between two adjacent flat surfaces connected by the bent portion 21 is 45° to 180°.

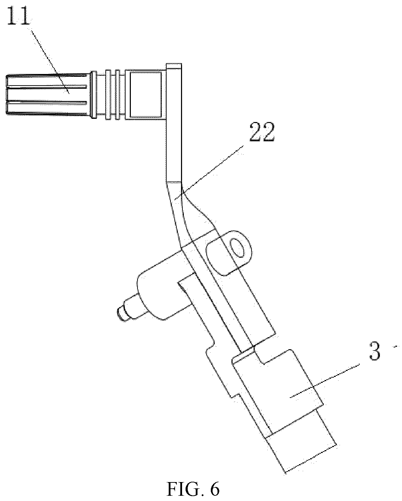

In some embodiments, the transition flat cable 2 has at least one twisted portion 22, as illustrated in FIG. 6, and an included angle between two adjacent flat surfaces connected by the twisted portion 22 is 0° to 90°. That is, the two flat surfaces of the transition flat cable 2 form a certain angle through the twisting of the twisted portion 22, and the angle may be any value as needed, so as to meet different assembly environments.

The present disclosure further discloses a vehicle, including the conveniently replaceable charging socket described above. The charging socket body 1 is detachably connected to a vehicle body of the vehicle, and the conductive cable 3 is provided on the vehicle body. When the charging socket is to be replaced, there is no need to move the conductive cable 3, and it is only needed to separate the transition flat cable 2 from the conductive cable 3, then remove the charging socket body 1, and after the maintenance or the replacement with the new charging socket body 1, connect the transition flat cable 2 with the conductive cable 3 again, thereby completing the replacement of the charging socket. In addition, when the charging socket body 1 is to be maintained, it is only needed to disconnect the transition flat cable 2 and the conductive cable 3 to perform the maintenance under the condition of power off, thereby ensuring the safety of workers.

Although some specific embodiments of the present disclosure have been described in detail by examples, those skilled in the art should understand that the above examples are only for illustration and are not intended to limit the scope of the present disclosure. Those skilled in the art should understand that the above embodiments can be modified without departing from the scope and spirit of the present disclosure. The scope of the present disclosure is defined by the appended claims.

## Claims

1. A conveniently replaceable charging socket, comprising a charging socket body (1), a transition flat cable (2) and a conductive cable (3);
wherein the charging socket body (1) is provided therein with a charging terminal (11); and
the transition flat cable (2) has one end connected to the charging terminal (11), and the other end detachably connected to the conductive cable (3).

2. The conveniently replaceable charging socket according to claim 1, wherein the charging terminal (11) and the transition flat cable (2) are connected to each other by means of crimping, welding, screwing or riveting.

3. The conveniently replaceable charging socket according to claim 1, wherein the conductive cable (3) is a flat cable and connected to the transition flat cable (2) by a bolt.

4. The conveniently replaceable charging socket according to claim 1, wherein the conductive cable (3) is a copper busbar or an aluminum busbar.

5. The conveniently replaceable charging socket according to claim 1, wherein the charging socket body (1) is a DC charging socket body, and there are charging terminals (11) which are a positive terminal (111) and a negative terminal (112), respectively.

6. The conveniently replaceable charging socket according to claim 1, wherein the charging terminal (11) has a plating layer.

7. The conveniently replaceable charging socket according to claim 1, wherein a contact resistance between the transition flat cable (2) and the conductive cable (3) is less than 9 mQ.

8. The conveniently replaceable charging socket according to claim 1, wherein the transition flat cable (2) has at least one bent portion (21), and an included angle between two adjacent flat surfaces connected by the bent portion (21) is 45° to 180°.

9. The conveniently replaceable charging socket according to claim 1, wherein the transition flat cable (2) has at least one twisted portion (22), and an included angle between two adjacent flat surfaces connected by the twisted portion (22) is 0° to 90°.

10. A vehicle, comprising the conveniently replaceable charging socket according to any one of claims 1 to 9, wherein the charging socket body (1) is detachably connected to a vehicle body of the vehicle, and the conductive cable (3) is provided on the vehicle body.
